Europäisches Patentamt

European Patent Office

Office européen des brevets

(11) Numéro de publication: **0 243 232**
**A1**

## DEMANDE DE BREVET EUROPEEN

(21) Numéro de dépôt: 87400760.2

(22) Date de dépôt: 06.04.87

(51) Int. Cl.⁴: **H 02 P 8/00**
**G 01 J 1/44**

(30) Priorité: 08.04.86 FR 8605005

(43) Date de publication de la demande:
28.10.87 Bulletin 87/44

(84) Etats contractants désignés:
AT BE CH DE ES GB GR IT LI LU NL SE

(71) Demandeur: SOLEMS S.A. Société dite:
3, rue Léon Blum Z.I. Les Glaises
F-91120 Palaiseau (FR)

(72) Inventeur: Guterman, Charles
56, rue Gustave Vatonne
F-91190 Gif sur Yvette (FR)

(74) Mandataire: Lerner, François
5, rue Jules Lefèbvre
F-75009 Paris (FR)

(54) Dispositif générateur de signaux électriques et ses applications.

(57) L'invention concerne un dispositif générateur de signaux électriques et ses applications.

Selon l'invention, le dispositif générateur de signaux comprend au moins un générateur de courant électrique de type pile photovoltaïque (20) et un générateur d'impulsions (30) alimenté par ladite pile (20) et délivrant un signal qui est fonction de l'énergie électrique délivrée par la pile.

L'invention s'applique notamment à l'entrainement d'un moteur de type pas à pas ou encore à l'alimentation d'un intégrateur de lumière.

FIG.1

EP 0 243 232 A1

**Description**

## DISPOSITIF GENERATEUR DE SIGNAUX ELECTRIQUES ET SES APPLICATIONS

L'invention concerne un dispositif générateur de signaux électriques ainsi qu'un dispositif d'entraînement d'un mobile au moyen d'un moteur du type pas à pas commandé par le générateur de signaux électriques de l'invention.

Le dispositif générateur conforme à l'invention est notamment destiné à être utilisé, comme il vient d'être dit, pour alimenter un moteur pas à pas, ou encore pour alimenter un intégrateur de lumière du type photomètre ; et ce notamment, en fonction de l'intensité lumineuse régnant dans l'environnement où est disposé le dispositif générateur.

A la connaissance du Demandeur, il n'existe pas de générateur de signaux électriques alimenté par un générateur de courant du type pile photovoltaïque et susceptible de délivrer un signal de sortie en fonction de l'énergie électrique délivrée par la pile.

Aussi, l'un des objets essentiels de l'invention est de prévoir un dispositif générateur de signaux comprenant :

- un générateur de courant électrique à faible énergie, telle qu'une pile photovoltaïque et,

- un générateur d'impulsions alimenté par ladite pile et délivrant un signal qui est fonction de l'énergie électrique délivrée par la pile.

Selon une caractéristique complémentaire de l'invention, on prévoit un générateur d'impulsions, d'un premier type, comprenant, notamment, une autre pile photovoltaïque éclairée par une source lumineuse, un condensateur alimenté par ladite autre pile, et un multivibrateur astable commandé par ledit condensateur et délivrant un signal électrique dont la fréquence est sensiblement proportionnelle à la quantité de lumière captée par ladite autre pile.

De cette façon, il est possible au moyen d'un circuit électronique relativement simple, à base de composants peu onéreux, de constituer un générateur délivrant des impulsions dont la fréquence est sensiblement proportionnelle à la quantité de lumière reçue par une pile photovoltaïque formant capteur.

Selon une variante de réalisation de l'invention, on prévoit un générateur d'impulsions, d'un second type, comprenant un diviseur de tension, un programmateur, et un multivibrateur astable formant générateur de rythme commandé par ledit programmateur et délivrant un signal électrique dont la fréquence est sensiblement constante.

De cette façon, on peut constituer, au moyen de composants électroniques relativement courants et peu coûteux, un circuit électrique formant un générateur qui délivre des impulsions dont la fréquence est sensiblement constante.

Selon l'invention, le dispositif générateur de signaux est notamment destiné à l'entraînement d'un moteur pas à pas. Comme on le comprend, ce moteur sera entraîné à vitesse sensiblement constante dans le cas où l'on choisira d'utiliser le générateur d'impulsions du second type, c'est-à-dire "à fréquence constante". Par contre, si l'on choisit le générateur d'impulsions du premier type, c'est-à-dire "à fréquence proportionnelle à l'éclairement", le moteur sera alors entraîné à vitesse essentiellement variable en fonction de la quantité de lumière reçue par la pile photovoltaïque formant capteur.

Une autre application du générateur de signaux à un intégrateur de lumière est aussi envisagée. Dans ce cas, on utilisera, comme on le comprend, le générateur d'impulsions du premier type "à fréquence proportionnelle à l'éclairement".

Conformément à ce qui a déjà été énoncé, un autre objet de la présente invention consiste en un dispositif d'entraînement, notamment d'un mobile, au moyen d'un moteur pas à pas commandé par le générateur de signaux électriques de l'invention.

Plus spécifiquement, ce dispositif d'entraînement comprend ledit dispositif générateur de signaux, ledit moteur pas à pas, et un moyen souple d'accouplement au mobile à entraîner.

Avantageusement, le moteur pas à pas utilisé sera un moteur de mouvement d'horlogerie.

D'autres caractéristiques et avantages de l'invention apparaîtront plus clairement à l'aide de la description qui va suivre faite en référence aux dessins d'accompagnement dans lesquels :

- la figure 1 est un schéma synoptique d'un circuit d'alimentation d'un moteur pas à pas au moyen d'un générateur de signaux électriques délivrant des impulsions à fréquence constante,

- la figure 2 est un schéma synoptique montrant une variante de réalisation d'un circuit d'alimentation d'un moteur pas à pas au moyen d'un générateur de signaux électriques ; le générateur délivrant des impulsions à fréquence sensiblement proportionnelle à la quantité de lumière captée par la pile photovoltaïque formant capteur,

- la figure 3 présente un circuit de montage du dispositif de signaux électriques du type de celui présenté à la figure 2, dans le cas d'une application à un intégrateur de lumière.

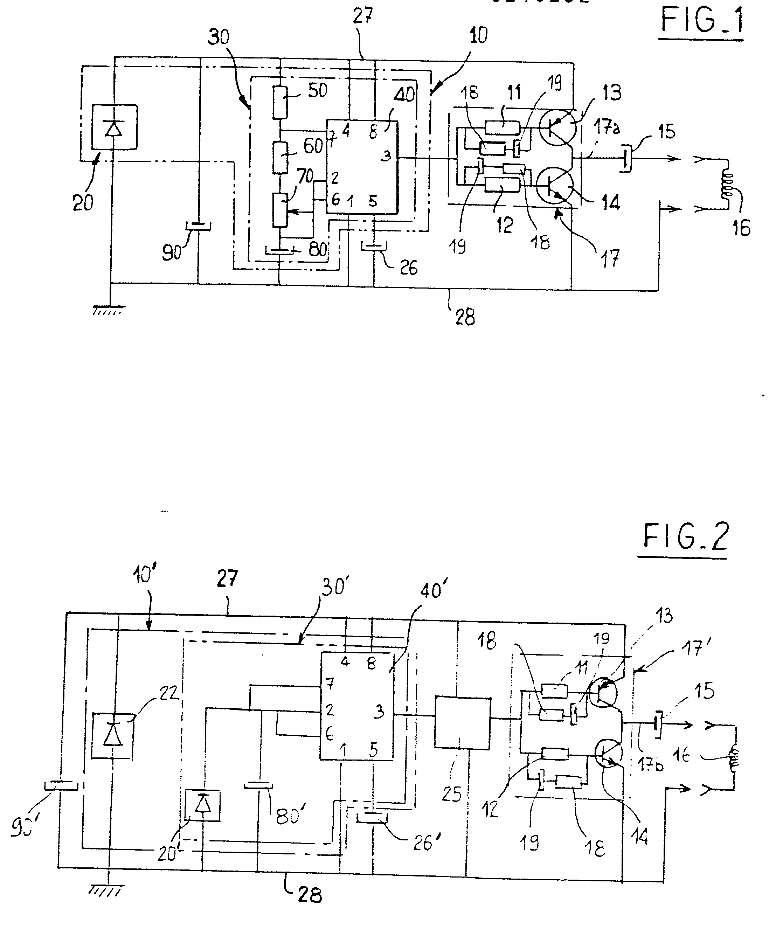

Si l'on se réfère, tout d'abord, à la figure 1, on voit un circuit de montage d'un générateur de signaux conforme à l'invention, du type destiné à être appliqué à l'alimentation d'un moteur pas à pas entraîné à vitesse constante.

On notera, dés à présent, que ce circuit est, comme on le comprend, relié à la masse.

Le générateur de signaux électriques repéré dans son ensemble 10, comprend une pile 20 et un générateur d'impulsions 30.

Selon l'invention, on utilise avantageusement, comme pile 20, une pile du type photovoltaïque. Toutefois, dans certaines applications spécifiques, et à titre d'équivalents techniques, on peut envisager d'employer une pile électrique classique, c'est-à-dire, de nature chimique. Une telle pile pourra, par exemple, être utilisée si le générateur de courant continu de l'invention est disposé dans un local trop peu éclairé.

La pile photovoltaïque, ne constituant pas en elle-même l'objet de l'invention, ne sera pas décrite.

On notera qu'en parallèle, aux bornes de cette pile 20, on prévoit avantageusement un condensateur repéré 90. Ce condensateur sert de filtre et est destiné à limiter et à lisser les variations de la tension d'alimentation délivrée par la pile au générateur d'impulsions. Il permet, notamment, l'entraînement initial du moteur (représenté par sa bobine 16) et son alimentation filtrée.

Le générateur d'impulsions 30 comprend un multivibrateur astable 40 et une unité programmateur ajustable/unité de mise en forme du signal comprenant en parallèle, entre la ligne d'alimentation 27 et la ligne de masse 28, deux résistances 50, 60 montées en série avec une troisième 70, de préférence ajustable, elle-même montée en série avec un condensateur 80.

Le multivibrateur 40 constitue, dans ce circuit, le générateur de rythme du dispositif. La fréquence des signaux électriques qu'il délivre est déterminée, ou ajustée, par le programmateur 60, 70, 80, dont on fixe le battement en agissant sur la résistance 70.

La liaison entre le multivibrateur et le programmateur / unité de mise en forme est telle que la borne 7 du multivibrateur 40 est branchée au niveau de la liaison entre elles des résistances 50, 60, tandis que ses bornes 2 et 6 sont branchées entre la résistance ajustable 70 et le condensateur 80. Par ailleurs la borne 1 de ce même multivibrateur est reliée directement à la masse, tandis que sa borne 5 est reliée à un condensateur 26, lui-même relié à la ligne de masse. Les bornes 4 et 8 sont reliées à la ligne d'alimentation du circuit par la pile 20. Enfin, la borne 3 est reliée à une unité d'amplification 17 délivrant à un condensateur 15 connecté à la bobine 16, un signal amplifié issu de cette borne 3 du multivibrateur.

L'unité d'amplification 17, soumise à la tension de la pile 20 est constituée par deux branches formées chacune d'une résistance 11 ou 12 suivie en série d'un transistor PNP 13 ou NPN 14 reliés entre eux au niveau de leur collecteur. En outre l'émetteur du transistor 13 est relié à la ligne d'alimentation 27, tandis que celui du transistor 14 est relié à la ligne de masse 28.

Le dispositif que l'on vient de décrire fonctionne comme suit.

La pile 20 est soumise, si nécessaire, à éclairement et alimente le générateur d'impulsions 30.

La tension d'alimentation aux bornes de ce générateur est noté V.

Le condensateur 80 se charge alors à travers les résistances 50, 60 et 70, jusqu'à la tension $\frac{2}{3}$ V. Un interrupteur interne au multivibrateur 40 (non représenté), met la borne 7 à la masse et le condensateur 80 se décharge, vers le multivibrateur, à travers les résistances 60 et 70 jusqu'à la tension $\frac{V}{3}$. La fréquence des charges/décharges du condensateur 80, fixée par les résistances 50, 60 et 70 est, comme on le comprend, sensiblement constante. Le rythme imposé au multivibrateur 40 par le programmateur 70, 80 est donc, également, sensiblement constant.

A la suite de la décharge du condensateur 80, la borne 7 s'ouvre à nouveau et le condensateur se recharge jusqu'à la tension $\frac{2}{3}$ V.

Les charges et les décharges successives du condensateur commandent au multivibrateur 40 de délivrer, au niveau de sa borne de sortie 3, un signal électrique. Celui-ci est du type "signal carré" dont la fréquence est sensiblement constante. Ce signal est alors amplifié au niveau du circuit d'amplification 17, alternativement par les transistors PNP 13 et NPN 14, après avoir traversé la résistance 11 ou 12.

A cette étape de la description, on notera qu'en parallèle aux bornes de la résistance 11 (respectivement 12), on peut prévoir avantageusement une ligne "tampon" formée d'une résistance 18 reliée en série avec un condensateur 19. Ces lignes permettent de diminuer l'intensité du courant traversant les résistances 11 et 12 pendant l'intervalle de temps séparant deux impulsions alternatives successives émises par le multivibrateur 40. Ainsi, on abaisse de façon sensible la consommation de courant.

En sortie 17a de l'unité de l'amplification 17, le signal, qui vient d'être amplifié, est appliqué à un circuit dérivateur constitué par le condensateur 15 et la bobine 16 fortement résistive qui ferme le circuit sur la ligne de masse 28.

Le signal de tension dérivé par le condensateur 15 et qui alimente le moteur pas à pas, est, comme on le comprend, alternatif et périodique.

L'intervalle de temps pendant lequel s'établit ce signal est relativement court, par exemple, de l'ordre de 50 millisecondes. On peut, à titre d'exemple, situer l'intervalle entre deux impulsions alternatives successives sensiblement entre 200 et 300 millisecondes.

En d'autres termes, le circuit présenté à la figure 1 et dont on vient de présenter le fonctionnement, permet d'alimenter en énergie électrique un moteur pas à pas, lequel moteur est commandé par des impulsions délivrées à fréquence sensiblement constante, ce qui per met de lui assurer une vitesse d'entraînement également sensiblement constante.

Cependant, dans une utilisation différente de ce même moteur pas à pas, il peut être avantageux de faire varier la fréquence du signal de commande du moteur, et ce de façon sensiblement proportionnelle à la quantité de lumière que recevrait une pile photovoltaïque formant capteur.

A cette fin, on prévoit, selon l'invention, d'utiliser un dispositif générateur de signaux électriques tel que celui illustré à la figure 2.

Sur cette figure 2, on voit un dispositif générateur repéré 10', et comportant une pile 22 reliée à la masse et un générateur d'impulsions 30'.

Le générateur d'impulsions 30' comprend un multivibrateur astable 40' du même type que celui (40) déjà décrit.

La pile 22 assure l'alimentation en énergie électrique du multivibrateur 40'. Comme précédemment, les bornes 4 et 8 du multivibrateur sont reliées à la ligne d'alimentation 27, tandis que les bornes 1 et 5 sont en liaison avec la ligne de masse 28, la borne 5 à travers la condensateur 26'.

La pile 22 illustrée figure 2 est une pile photovoltaïque. Cependant, elle pourrait aussi, éventuellement, consister en une pile électrique classique (pile chimique).

Aux bornes de la pile 22, on branche avantageusement, en parallèle, un condensateur 90′ dont le rôle est semblable à celui du condensateur 90 déjà présenté. Le condensateur 90′ sert donc de filtre en intégrant les variations de la tension délivrée au multivibrateur et permet d'assurer l'entraînement initial du moteur (représenté par sa bobine 16) et son alimentation.

La programmation de la fréquence des signaux délivrés par le multivibrateur 40′ est réalisée au moyen d'un condensateur 80′ soumis à la tension d'une pile complémentaire photovoltaïque 20′ et relié aux bornes 2, 6 et 7 de ce même multivibrateur.

La pile 20′ et le condensateur 80′ sont également reliés à la ligne de masse.

La pile photovoltaïque 20′ constitue un capteur actif qui, soumis à l'éclairement d'une source lumineuse, assure la charge du condensateur 80′. Cette charge est d'autant plus rapide que la quantité de lumière captée par la photopile 20′ est plus importante. On notera que le temps de charge du condensateur est inversement proportionnel à l'intensité du courant délivré par la pile 20′. Par contre, cette intensité de courant est sensiblement proportionnelle à l'intensité lumineuse que cette dernière reçoit.

Le dispositif générateur de signaux électriques présenté à la figure 2 fonctionne comme suit.

Si on note V la tension délivrée par la pile 20′, laquelle est soumise à éclairement, la tension de déclenchement du condensateur 8o′ est, comme précédemment, sensiblement égale à $\frac{2}{3}$ V.

Dès qu'il atteint cette valeur, le condensateur 80′ se décharge jusqu'à la tension $\frac{v}{3}$ par la borne 7 dans le multivibrateur. A cette fin, un interrupteur interne au multivibrateur met cette borne 7 à la masse.

Ayant atteint la valeur $\frac{v}{3}$, le condensateur se recharge à nouveau jusqu'à la tension $\frac{2}{3}$ V ; la borne 7 se refermant à nouveau.

Les charges/décharges successives du condensateur 80′ fixent le rythme de fonctionnement du multivibrateur 40′.

En d'autres termes, le condensateur 80′ conjointement avec la photopile 20′ assurent, dans ce cas, la fonction de générateur de rythme en permettant au multivibrateur d'élaborer des impulsions électriques dont la fréquence est sensiblement proportionnelle à la quantité de lumière captée par la photopile 20′.

Le signal délivré au niveau de la borne de sor tie 3 du multivibrateur 40′ est mis en forme dans un circuit de mise en forme 25, en soi connu, qui est soumis à la tension de la pile 22 et qui élabore un signal sensiblement carré dont la fréquence est également, comme on le comprend, sensiblement proportionnelle à l'intensité lumineuse captée par la photopile 20′.

Le signal issu du circuit de mise en forme 25 est ensuite amplifié au niveau d'une unité d'amplification repérée 17′. Cette unité d'amplification 17′ est identique et montée sur le circuit de la même façon que celle (17) présentée à la figure 1. Aussi elle ne sera pas à nouveau décrite.

En sortie 17b de l'unité 17′, le signal amplifié émis par le multivibrateur est appliqué sur un circuit dérivateur du type déjà présenté constitué par le condensateur 15 et la bobine 16 du moteur pas à pas.

De cette façon, et comme on le comprend, le moteur pas à pas est alimenté ou commandé par des impulsions alternatives dont la fréquence est sensiblement proportionnelle à la quantité de lumière captée par la photopile ou pile photovoltaïque 20′.

En conséquence, le circuit présenté à la figure 2 et dont on vient d'expliquer le fonctionnement, permet d'entraîner le moteur pas à pas à une vitesse qui est également sensiblement proportionnelle à la quantité d'énergie lumineuse emmagasinée par la pile 20′ formant capteur.

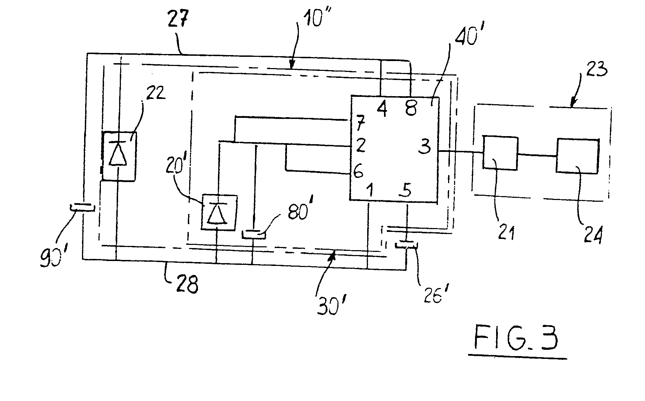

A la figure 3, on a représenté une autre application du dispositif générateur de signaux conforme à l'invention.

Ce dispositif générateur, repéré 10″ sur cette figure 3 est identique au niveau de ses composants et de leur montage sur le circuit, à celui (10′) représenté à la figure 2. Aussi, il ne sera pas à nouveau décrit. Aux bornes de la pile 22 on peut toujours prévoir un consensateur, tel que 90′.

Dans cette application, la sortie 3 du multivibrateur 40′ est reliée à un compteur d'impulsions 21, lui-même relié en série à un afficheur 24.

Le compteur d'impulsions ou diviseur de fréquence 21 et l'afficheur 24, par exemple du type à cristaux liquides, constituent un intégrateur de lumière ou photomètre repéré 23. Cet intégrateur compte le nombre d'impulsions qu'il reçoit, lesquelles impulsions ont, comme on le comprend, une fréquence sensiblement proportionnelle à la quantité de lumière captée par la pile photovoltaïque 20′ formant capteur.

Un tel photomètre peut avoir de nombreuses applications industrielles. Il peut être, par exmeple, utilisé dans un circuit de surveillance à détection optique.

Par ailleurs, dans le cas où l'on réserve l'application du générateur de signaux électriques de l'invention à un moteur pas à pas, on peut notamment envisager d'utiliser un tel moteur pour entraîner des modules ou des mobiles à caractère décoratif ou publicitaire. Cette destination n'est, bien entendu, pas limitative.

Avantageusemênt, le moteur pas à pas que l'on utilise dans l'invention est du type moteur de mouvement d'horlogerie, tel que par exemple une horloge murale analogique à quartz. Un tel moteur est connu et ne sera donc pas décrit. Toutefois, on notera que selon l'invention, on ne conserve de l'ensemble du moteur (non représenté) que le rotor, le stator (correspondant à la bobine 16), les engrenages réducteurs, ainsi qu'un moyen de transmission vers l'extérieur du mouvement du moteur ainsi constitué. Ce moyen de transmission peut consister, notamment, en l'axe ou pivot central des aiguilles de l'horloge.

En d'autres termes, on remplace le quartz générateur d'impulsions et les diviseurs de fréquence du mouvement d'horlogerie choisi, par le circuit électrique formant dispositif générateur de signaux illustré à la figure 1 ou à la figure 2, suivant que l'on désire un entraînement du moteur à vitesse constante (figure 1) ou à vitesse variable et proportionnelle à l'éclairement de la photopile formant capteur (figure 2).

Comme il vient d'être dit, on peut envisager d'utiliser un tel moteur pour l'entraînement d'un mobile.

A cette fin, on prévoira avantageusement, outre le générateur de signaux électriques du type choisi, (conforme à celui présenté figure 1 ou figure 2), outre également le moteur pas à pas du type décrit ci-dessus et alimenté ou commandé par ledit générateur de signaux sélectionné, un moyen souple d'accouplement au mobile à entraîner ; cet ensemble ainsi constitué formant un dispositif d'entraînement simple de réalisation et relativement peu coûteux.

Avantageusement, le moyen souple d'accouplement, relié audit moyen de transmission du moteur, sera constitué par un fil en matériau souple élastique. On peut notamment prévoir un monofil en matière plastique étirée.

Toutefois, on peut prévoir d'utiliser, à titre de variante, un ressort de type à spirales. Comme on le comprend, cette énumération n'est cependant pas limitative.

Concernant la pile photovoltaïque, ou éventuellement les piles photovoltaïques utilisées, on notera que dans la plupart des applications du générateur de signaux électriques de l'invention, cette pile est sensible au spectre lumineux visible. Aussi, on choisira, de préférence, une pile au silicium amorphe.

Dans les montages de l'invention que l'on a décrite, différents composants peuvent être utilisés.

A titre d'exemple, on notera toutefois l'emploi possible, en tant que multivibrateurs 40, 40' d'un circuit intégré du type CMOS 555 fabriqué par la Société TEXAS INSTRUMENTS. Le diviseur de fréquence ou circuit de mise en forme 25 ainsi que le compteur d'impulsions 21 du photomètre pourraient être du type CMOS CD 4027, également fabriqués par la SOciété TEXAS INSTRUMENTS. Une pile 20, 22 d'environ 3 V à vide serait en outre tout à fait adaptée.

## Revendications

1. - Dispositif générateur de signaux (10, 10', 10″), caractérisé en ce qu'il comprend :
   - un générateur de courant électrique (20, 22) à faible énergie tel qu'une pile photovoltaïque, et
   - un générateur d'impulsions (30, 30') alimenté par ladite pile (20, 22) et délivrant un signal qui est fonction de l'énergie électrique délivrée par la pile.

2. - Dispositif générateur, selon la revendication 1, caractérisé en ce que ledit générateur d'impulsions (30') comprend :
   - une autre pile photovoltaïque (20') éclairée par une source lumineuse,
   - un condensateur (80') alimenté par ladite autre pile (20') et

   - un multivibrateur astable (40') commandé par ledit condensateur (80') et délivrant un signal électrique dont la fréquence est sensiblement proportionnelle à la quantité de lumiére captée par ladite autre pile

3. - Dispositif selon la revendication 2, caractérisé en ce qu'il comprend un circuit de mise en forme (25), en soi connu, qui reçoit et traite le signal électrique délivré par ledit multivibrateur (40').

4. - Dispositif selon la revendication 1, caractérisé en ce que ledit générateur d'impulsions (30) comprend :
   - un diviseur de tension (50,60),
   - un programmateur (70,80), et
   - un multivibrateur astable (40) formant générateur de rythme commandé par ledit programmateur et délivrant un signal électrique dont la fréquence est sensiblement constante.

5. - Dispositif selon l'une quelconque des revendications 1 à 4, caractérisé en ce qu'il comprend un condensateur (90,90') disposé en parallèle sur l'alimentation du générateur d'impulsions par ladite pile (20,22).

6. - Dispositif générateur selon l'une quelconque des revendications précédentes, caractérisé en ce que ladite pile photovoltaïque (20, 20', 22) est une pile sensible au spectre lumineux visible, telle par exemple qu'une pile au silicium amorphe.

7. - Application du dispositif générateur selon l'une quelconque des revendications précédentes à l'alimentation d'un moteur pas à pas, caractérisée en ce qu'on utilise un tel dispositif générateur de signaux électriques (10,10') pour commander l'entraînement du moteur pas à pas.

8. - Application selon la revendication 7, caractérisée en ce que le moteur pas à pas est un moteur de mouvement d'horlogerie, en soi connu, comprenant au moins :
   - un rotor,
   - un stator,
   - des pignons réducteurs, et
   - un moyen de transmission vers l'extérieur du mouvement du moteur.

9. - Application du dispositif générateur selon l'une quelconque des revendications 1 à 6, à un intégrateur de lumière du type photomètre (23), caractérisée en ce qu'on utilise un tel dispositif générateur de signaux électriques (10', 10″) pour alimenter ledit intégrateur (17).

10. - Dispositif d'entraînement d'un mobile au moyen d'un moteur pas à pas commandé par ledit générateur de signaux électriques selon la revendication 7 ou la revendication 8, caractérisé en ce qu'il comprend, en combinaison :
    - ledit dispositif générateur de signaux (10,10'),
    - ledit moteur pas à pas, et
    - un moyen souple d'accouplement au mobile à entraîner, ledit moyen étant en outre relié audit moyen de transmission.

11. - Dispositif selon la revendication 10, caractérisé en ce que ledit moyen souple d'accouplement est un fil en matériau souple élastique.

12. - Dispositif selon la revendication 10, caractérisé en ce que ledit moyen souple d'accouplement est un ressort du type à spirales.

0243232

**FIG. 1**

**FIG. 2**

0243232

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WIRELESS WORLD, vol. 88, no. 1555, avril 1982, pages 41-43, Sheepen Place, Olchester, GB; J.L. LINSLEY HOOD: "555-Type integrated circuits" * En entier * | 1 | H 02 P 8/00 G 01 J 1/44 |
| | --- | | |
| A | FR-A-2 071 423 (WESTINGHOUSE) * Revendication 1; figure 1 * | 1,8 | |
| | --- | | |
| A | FR-A-1 391 339 (SIEMENS) * Résumé; figure 1 * | 9 | |
| | ----- | | |

DOMAINES TECHNIQUES RECHERCHES (Int. Cl.4)

H 02 P
G 01 J
H 03 K

Le présent rapport de recherche a été établi pour toutes les revendications

| Lieu de la recherche | Date d'achèvement de la recherche | Examinateur |
|---|---|---|
| LA HAYE | 04-08-1987 | ZAEGEL B.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82